# DEMANDE DE BREVET EUROPEEN

(11) **EP 1 254 816 A1**
(43) Date de publication de la demande: **06.11.2002**
(21) Numéro de dépôt: 02291061.6
(22) Date de dépôt: 26.04.2002
(51) Int. Cl.: B60T 7/10

(54) **Frein de parking pour véhicule automobile**

(30) Priorité: 04.05.2001 FR 0105966
(71) Demandeur: Renault s.a.s., 92100 Boulogne Billancourt (FR)
(72) Inventeur: Hamel, Patrice, 75014 Paris (FR); Sanchez, Léonardo, 95000 Cergy Pontoise (FR); Legrand, Jean-Pierre, 28300 Bercheres Saint Germain (FR); Tramet, Jacques, 78180 Montigny le Bretonneux (FR)

(57) **Abrégé**

Ce frein de parking comprend une unité de commande (1) placée sur la planche de bord (T), une unité de multiplication d'effort (3) et des unités de transmission (2, 4) pour transmettre l'effort de serrage appliqué à l'unité de commande (1) sur les éléments de serrage des roues arrière du véhicule.

Selon l'invention, l'unité de multiplication d'effort (3) est située sous le plancher (D) de l'habitacle du véhicule dans une zone (Z) située devant le siège avant de passager et l'une (2) des unités de transmission est un câble de traction (8) courant partiellement dans le poste de conduite et sous ledit plancher (D) entre ladite unité de commande (1) et ladite unité de multiplication d'effort (3).

## Description

La présente invention est relative à un frein de parking pour véhicule automobile.

Classiquement, les freins de ce type ont été réalisés essentiellement de deux façons.

Dans une première réalisation, le mécanisme de commande du frein de parking se trouve entre les sièges avant du véhicule en intégrant la multiplication d'effort et les organes de blocage crantés dans un tunnel central du plancher.

Cependant, dans de nombreux modèles de véhicules, on a préféré disposer le mécanisme de frein de parking dans la planche de bord du véhicule, sa poignée de commande étant alors accessible à côté du volant de direction.

Il est connu par ailleurs qu'un frein de parking doit fournir un effort de l'ordre de 100 daN sur chaque roue, alors que pour des raisons ergonomiques, l'effort à fournir au levier de commande du frein doit être très inférieur à 35 daN. Pour obtenir une telle multiplication d'effort, le frein de parking disposé dans la planche de bord doit avoir une course importante. Dans ces conditions, le levier de multiplication d'effort doit également avoir une course importante pour pouvoir transmettre l'effort du conducteur sur les patins de frein des roues. Or, dans les véhicules automobiles récents, l'architecture du poste de conduite résultant d'un compromis entre d'une part les contraintes de sécurité, d'ergonomie et de rangement, et d'autre part l'implantation des pédaliers, la colonne de direction, le câblage électrique etc..., ne permet pas d'abriter un tel levier de multiplication d'effort à grand débattement.

L'invention a pour but de fournir un frein de parking pour véhicule automobile comportant une poignée de commande disposée sur la planche de bord et dont la construction permette néanmoins de satisfaire les exigences en matière d'ergonomie du poste de conduite du véhicule.

L'invention a donc pour objet un frein de parking pour véhicule automobile comprenant une unité de commande placée sur la planche de bord à proximité du volant de direction, une unité de multiplication d'effort et des unités de transmission pour transmettre l'effort de serrage appliqué à ladite unité de commande sur les éléments de serrage des roues arrière du véhicule,
caractérisé en ce que ladite unité de multiplication d'effort est située sous le plancher de l'habitacle dans une zone située devant le siège avant de passager et en ce que l'une des unités de transmission est un câble de traction courant partiellement dans le poste de conduite et sous ledit plancher entre ladite unité de commande et ladite unité de multiplication d'effort.

Grâce à ces caractéristiques, le frein de parking n'encombre pas l'espace ergonomique, ne dégrade pas la sécurité en matière de chocs (genou), tout en laissant également la place nécessaire pour loger l'ensemble des éléments d'un poste de conduite (pédalier, colonne de direction, câblage électrique, .....).

Suivant d'autres caractéristiques de l'invention:
- ledit câble de traction traverse une ouverture ménagée dans ledit plancher et entre cette ouverture et ladite unité de commande, ledit câble est engagé dans un tube de guidage destiné à le maintenir en position dans l'espace situé devant le siège de conducteur du véhicule dans lequel est disposé le pédalier;
- ledit tube de guidage est disposé à peu près verticalement et cintré, sa convexité étant tournée vers l'avant du véhicule;
- ladite unité de multiplication d'effort comprend une platine de montage fixée sur la carrosserie du véhicule et portant un levier de multiplication d'effort auquel sont couplées lesdites unités de transmission et qui est monté pivotant sur ladite platine dans un plan parallèle au plan de celle-ci;
- ladite platine est disposée dans une position inclinée vers l'avant du véhicule en s'adaptant à la forme dudit plancher.

D'autres caractéristiques et avantages de la présente invention apparaîtront au cours de la description qui va suivre, donnée uniquement à titre d'exemple et faite en se référant aux dessins annexés sur lesquels:
- la figure 1 est une représentation schématique avec arrachement partiel de la partie avant de l'habitacle d'un véhicule automobile vue vers la planche de bord, avec l'implantation du frein de parking selon l'invention;
- la figure 2 est une vue détaillée d'une platine de support sur laquelle est montée une partie du mécanisme de frein de parking selon l'invention; et
- la figure 3 représente par une vue de côté l'implantation de ce mécanisme par rapport au poste de conduite du véhicule.

En se référant désormais aux figures, on a représenté schématiquement la partie avant de l'habitacle d'un véhicule automobile avec la planche de bord A s'étendant devant le siège (non représenté) du conducteur et celui (également non représenté) du passager avant, une console centrale C étant disposée au centre de la planche de bord A.

Devant le siège du conducteur sont agencés le volant B et le pédalier avec les pédales d'accélérateur P1, de frein P2 et d'embrayage P3. On aperçoit également le plancher D de l'habitacle.

Le frein de parking selon l'invention comprend une unité de commande 1 située, dans cet exemple, à gauche du volant de direction B, une première unité de transmission 2 reliant cette unité de commande 1 à une unité 3 de multiplication d'effort et une seconde unité de transmission 4 qui relie l'unité de multiplication d'effort 3 aux roues arrière (non représentées) du véhicule.

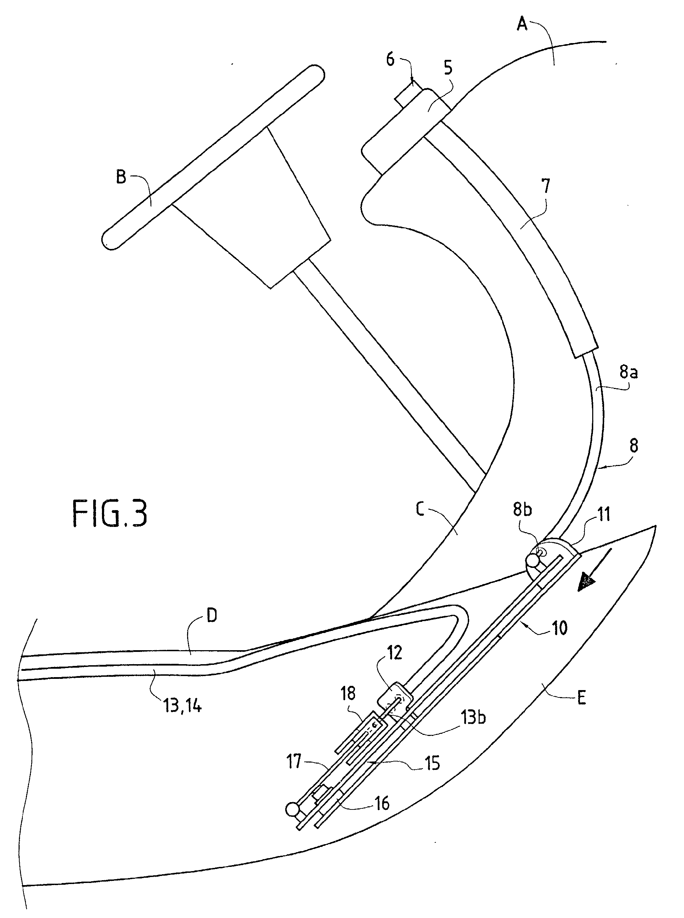

Selon l'invention, l'unité de commande 1 et l'unité 3 de multiplication d'effort sont dissociées l'une de l'autre, la première se trouvant près du volant B, tandis que la seconde est placée sous le plancher D de l'habitacle dans une zone Z située devant le siège du passager entre ce plancher D et le bas de caisse E de la carrosserie (voir aussi la figure 3).

L'unité de commande 1 comprend une poignée 5 munie d'un bouton de déverrouillage 6 et d'un tube de guidage 7 fixé au poste de conduite et s'étendant vers le bas. Cette unité de commande comprend également un dispositif de crantage classique (non représenté) qui permet de bloquer le frein de parking dans sa position de freinage, dispositif de crantage qui est déverrouillable par le bouton 6. On notera cependant que le tube de guidage 7 est cintré avec la courbure convexe dirigée vers l'avant, de telle sorte qu'il dégage ainsi l'espace réservé aux divers éléments de l'architecture du poste de conduite en offrant une cinématique acceptable du point de vue ergonomique (voir la figure 3).

La première unité de transmission 2 est un câble de type Bowden 8 qui passe dans le tube de guidage 7, traverse un trou 9 dans le plancher D et court ensuite en direction de la zone Z située devant le siège du passager pour atteindre l'unité de multiplication 3. La gaine 8a du câble 8 est connectée à une partie fixe de l'unité de commande 1 et son âme 8b est attachée à la poignée 5.

L'unité de multiplication d'effort 3 comprend une platine 10 fixée à la carrosserie du véhicule par des moyens non représentés et disposée entre le plancher D et le bas de caisse E. Avantageusement, la platine 10 est placée obliquement pour s'adapter à la forme que présente la carrosserie dans la zone Z.

La platine présente une première patte de fixation 11 pliée à l'équerre par rapport au plan général de la platine. Elle est destinée à la fixation de la gaine 8a du câble 8 et est traversée par l'âme 8b de celui-ci. Une deuxième patte de fixation 12 formée par une pièce en équerre est montée sur la platine 10.

La seconde unité de transmission 4 comprend deux câbles 13 et 14 de type Bowden qui s'étendent entre la platine 10 et les roues arrière respectives. Les gaines 13a et 14a de ces câbles sont connectées à la deuxième patte de fixation 12 et leurs âmes 13b et 14b traversent cette dernière.

L'unité de multiplication d'effort 3 comprend également un levier coudé pivotant 15 dont le coude est monté sur un pivot 16 solidaire de la platine 10. Ce levier coudé évolue dans un plan parallèle à celui de la platine 10 et il comprend une branche longue 15a à l'extrémité libre de laquelle est connectée l'âme 8b du câble 8, et également une branche courte 15b à l'extrémité libre de laquelle est connectée une tirette 17.

Cette tirette 17 est connectée par son autre extrémité à un palonnier 18 auquel sont fixées les âmes 13b et 14b des câbles de transmission 13 et 14.

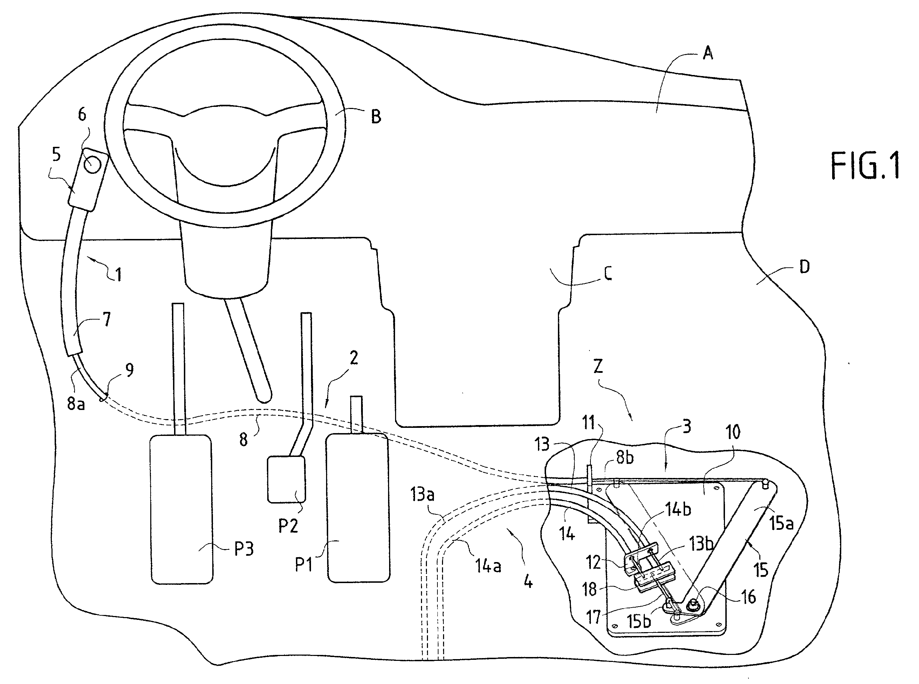

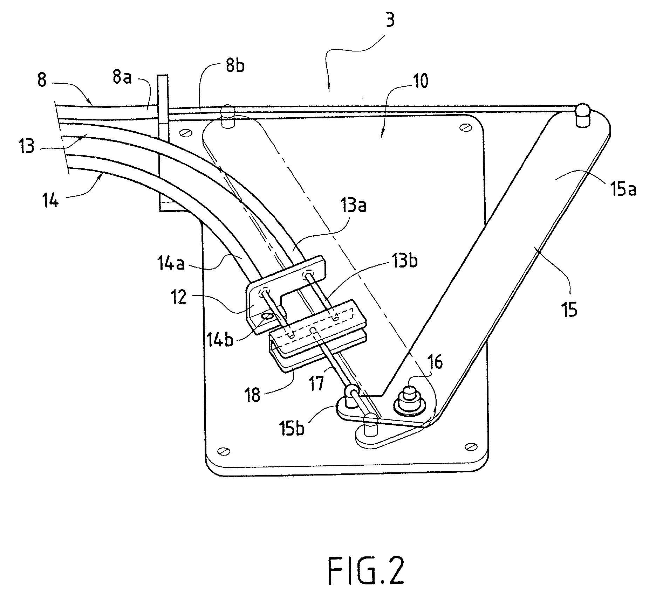

Les figures 1 et 2 représentent les deux positions du levier pivotant 15, la position en traits pleins correspondant au frein de parking desserré et la position en traits mixtes au frein de parking serré.

Selon une variante non représentée, il est possible de ne faire partir vers l'arrière qu'un seul câble de transmission directement actionné par la branche courte 15b du levier coudé 15 et de scinder ailleurs ce câble en deux brins menant respectivement vers les patins de frein des roues, le coupleur entre le câble et les brins pouvant être situé plus près des roues que ne l'est le palonnier 18.

Bien entendu, un dispositif de rappel élastique vers la position desserrée et un mécanisme de crantage peuvent être prévus à un endroit approprié dans la chaîne de transmission reliant l'unité de commande aux patins de frein situés respectivement dans les roues arrière du véhicule.

## Revendications

1. Frein de parking pour véhicule automobile comprenant une unité de commande (1) placée sur la planche de bord (T) à proximité du volant de direction (B), une unité de multiplication d'effort (3) et des unités de transmission (2, 4) pour transmettre l'effort de serrage appliqué à ladite unité de commande (1) sur les éléments de serrage des roues arrière du véhicule,
**caractérisé en ce que** ladite unité de multiplication d'effort (3) est située sous le plancher (D) de l'habitacle dans une zone (Z) située devant le siège avant de passager et **en ce que** l'une (2) des unités de transmission est un câble de traction (8) courant partiellement dans le poste de conduite et sous ledit plancher (D) entre ladite unité de commande (1) et ladite unité de multiplication d'effort (3).

2. Frein de parking suivant la revendication 1, **caractérisé en ce que** ledit câble de traction (8) traverse une ouverture (9) ménagée dans ledit plancher (D), et **en ce qu'**entre cette ouverture (9) et ladite unité de commande (1), ledit câble (8) est engagé dans un tube de guidage (7) destiné à le maintenir en position dans l'espace situé devant le siège de conducteur du véhicule dans lequel est disposé le pédalier (P1, P2, P3).

3. Frein de parking suivant la revendication 2, **caractérisé en ce que** ledit tube de guidage (7) est disposé à peu près verticalement et cintré, sa convexité étant tournée vers l'avant du véhicule.

4. Frein de parking suivant l'une quelconque des revendications 1 à 3, **caractérisé en ce que** ladite unité de multiplication d'effort (3) comprend une platine de montage (10) fixée sur la carrosserie du véhicule et portant un levier de multiplication d'effort (15) auquel sont couplées lesdites unités de transmission (2, 4) et qui est monté pivotant sur ladite platine (10) dans un plan parallèle au plan de celle-ci.

5. Frein de parking suivant la revendication 4, **caractérisé en ce que** ladite platine (10) est disposée dans une position inclinée vers l'avant du véhicule en s'adaptant à la forme dudit plancher (D).
